# EUROPEAN PATENT APPLICATION

(11) **EP 2 116 135 A1**
(43) Date of publication of application: **11.11.2009**
(21) Application number: 09159302.0
(22) Date of filing: 04.05.2009
(51) Int. Cl.: A23K 1/00, A23K 1/10, A23K 1/16, A23K 1/18

(54) **Pet snack food and production method thereof**

(30) Priority: 08.05.2008 JP 2008122532
(71) Applicant: Kabushiki Kaisha Tominaga Jyushi Kogyosho, Higashiosaka-shi, Osaka 577-0025 (JP)
(72) Inventor: Fumita, Kiyoshi, Osaka (JP)
(74) Representative: Viering, Jentschura & Partner

(57) **Abstract**

A pet snack food, which is excellent in eating preference and low in risk of causing health impairment for pets due to excessive consumption of nutrition even if it is given in somewhat large amounts as a snack in addition to regular feeding, is provided. The pet snack food is a mixed composition including starch and animal protein as essential ingredients, and preferably further including optional ingredients such as minerals, vitamins, yeasts, and dietary fibers. The pet snack food is a bulky formed product having a foaming ratio of 3 to 20 formed by bulk-foaming extrusion using an extruder.

## Description

### BACKGROUND

### Field of the Invention

The present invention, inter alia, relates to a pet snack food, and more specifically to, a pet snack food intended to be provided primarily to dogs as well as to other household pets, such as, e.g., cats and ferrets, and suitable to be provided as a snack-like supplementary food like a snack food for humans. The present invention also related to a production method thereof.

### Description of the Related Art

The following description sets forth the inventor's knowledge of related art and problems therein and should not be construed as an admission of knowledge in the prior art.

In recent years, not only in humans but also in household pets such as dogs and cats, there is an increasing trend for incidences of, e.g., obesity, hyperlipidemia, and diabetes due to lack of exercise, increased stress, and excessive intake of nutrition, like humans. Particularly, the number of pets that have developed a condition of metabolic syndrome, which likely causes various illnesses by visceral adiposity, has been certainly increased, and its preventive measures including medical treatment are strongly desired.

On the other hand, pets provide excellent "healing" effects to humans by interactions with humans, and contributes to stress relief and mood stabilizing, and therefore interactions and contacts with pets are increasingly being used as a part of medical practice at hospitals and assisted-living facilities and the like, in recent years.

As opportunities for interactions between humans and pets increase, however, humans often provide the pets with the pet's favorite foods or supplementary foods as snack foods as the most effective mean for making the pet attach to oneself and deepening the bond. This often results in excessive consumption of nutrition for the pets.

Conventionally, various types of foods or supplementary foods to be provided
as snack foods, which are disclosed in the below-listed Patent Documents 1 to 4, have been used.
[Patent Document 1] Japanese Unexamined Laid-open Patent Publication No. H07-115917 (JP-A-07-115917)
[Patent Document 2] Japanese Unexamined Laid-open Patent Publication No. H06-153810 (JP-A-06-153810)
[Patent Document 3] Japanese Unexamined Laid-open Patent Publication No. 2002-233313 (JP-A-2002-233313)
[Patent Document 4] Japanese Unexamined Laid-open Patent Publication No. 2004-89010 (JP-A-2004-89010)

However, frequently providing these foods, such as the ones described in the aforementioned Patent Documents 1 and 2, as snack foods in addition to regular feeding foods, can induce metabolic syndrome for pets due to the excessive intake of nutrition. On the other hand, in the case of providing supplementary foods as nonessential grocery items, such as, e.g., a chewing tool called "teether" or "chewing gum" for dogs and cats, as described in the aforementioned Patent Documents 3 and 4, there is a lower risk of excessive intake of nutrition as described above. However, as a means for interacting and deepening bonds with pets, there are less human actions and behaviors of repeatedly feeding pets' favorite foods to the pets, so there is a lack of satisfaction for the feeder, leading to a dilemma that the abovementioned "healing effect" and the like could not be sufficiently expected. In addition, in the case of indoor pets, providing the abovementioned chewing tool causes a large amount of dripping of intense salivation, which in turn soils furniture, floors and the like.

The description herein of advantages and disadvantages of various features, embodiments, methods, and apparatus disclosed in other publications is in no way intended to limit the present invention. For example, certain features of the preferred embodiments of the invention may be capable of overcoming certain disadvantages and/or providing certain advantages, such as, e.g., disadvantages and/or advantages discussed herein, while retaining some or all of the features, embodiments, methods, and apparatus disclosed therein.

### SUMMARY

The preferred embodiments of the present invention have been developed in view of the above-mentioned and/or other problems in the related art. The preferred embodiments of the present invention can significantly improve upon existing methods and/or apparatuses.

Among other potential advantages, some embodiments can provide a pet snack food capable of being suitably used as a supplementary food to be provided to pets as a snack or as a reward for training, in addition to primary and regular feeding foods.

More specifically, some embodiments can provided a pet snack food capable of thoroughly meeting various requirements, such as, e.g.,: being low in nutrition and low in risk of health impairment for pets even when feeding fairly large quantities; easily providing ample satisfaction for both the human feeder and the pet being fed by repetitive feeding of large amounts; having a good texture that is attractive and well liked by pets as luxury food; being easy to handle, which lowers the risk of undesirable soilure to clothing and hands, such as grease spots, even when the feeder continuously feeds small amounts by taking them out of a pocket of one's clothing and the like.

Considering the abovementioned problems, according to the present invention, the pet snack food is a bulky snack-like formed product low in nutrition, which is a main constitutional element for solving the problems. Specifically, the present invention has the following structures [1] to [6].
[1] A pet snack food, comprising:
   starch and animal protein as essential ingredients,
   wherein the pet snack food is a bulky formed product having a foaming ratio of 3 to 20.
[2] The pet snack food as recited in the aforementioned Item [1], wherein the bulky formed product is a ball shaped or short bar shaped product formed by bulk-forming kneaded materials including starch and animal protein with an extruder.
[3] The pet snack food as recited in the aforementioned Item [1], wherein the starch is an ingredient obtained from one or more materials selected from the group consisting of rice, wheat, corn, potato, sweet potato, and tapioca.
[4] The pet snack food as recited in the aforementioned Item [2], wherein the starch is an ingredient obtained from one or more materials selected from the group consisting of rice, wheat, corn, potato, sweet potato, and tapioca.
[5] The pet snack food as recited in the aforementioned Item [1], wherein the animal protein is an ingredient obtained from either one of or both the materials of animal meat and fish.
[6] The pet snack food as recited in the aforementioned Item [2], wherein the animal protein is an ingredient obtained from either one of or both the materials of animal meat and fish.
[7] The pet snack food as recited in the aforementioned Item [3], wherein the animal protein is an ingredient obtained from either one of or both the materials of animal meat and fish.
[8] The pet snack food as recited in the aforementioned Item [4], wherein the animal protein is an ingredient obtained from either one of or both the materials of animal meat and fish
[9] The pet snack food as recited in any one of the aforementioned Items [1] to [8], wherein the pet snack food further comprises one or more ingredients obtained from one or more than two materials selected from the group consisting of gelatin, sodium lactate, deodorizer, tea, shark cartilage, fermented bean powder, various types of yeasts, various types of vitamins, and bean curd refuse, as optional ingredients.
[10] A method for producing a pet snack food, comprising:
   preparing a mixed composition as a forming material including starch ingredient: 30 to 80 % by weight, animal protein: 5 to 40 % by weight, and optional component ingredients: 0 to 40 % by weight, wherein the water content rate of the mixed composition is adjusted to 15 to 35 % by weight;
   extruding the mixed composition through an extruder with a nozzle diameter of 3.0 to 8.0 mm while controlling the extrusion temperature at 100 to 180 °C to obtain a swollen bulky material having a foaming ratio of 3 to 20; and
   after the extrusion, cutting the extruded material into a length of 3.0 to 70.0 mm to thereby obtain a ball shaped, short stick shaped, or a flat plate shaped product as a pet snack food.

### Effect of the Invention

The pet snack food according to the present invention as recited in the abovementioned Item [1] includes starch which functions as a binder and animal protein which functions as a flavor, and is formed into a highly foamed bulky formed product. Thus, although it is bulky, it essentially includes very small amount of solid component. Therefore, even if a large amount of the pet snack food is provided to pets, there is a low risk for the pets for consuming excessive nutrition and health impairment, so the feeder can provide them with peace of mind, and the pets also feel satisfied with the false feeling that they have been fed a large amount of food.

Also, the pet snack food is a highly foamed bulky formed product including starch as its main ingredient. Therefore, although it is a highly bulky formed product, the shape is retained relatively well, making it easy to handle since it does not unexpectedly break apart.

In addition, the pet snack food includes animal protein which functions as flavor, which makes it possible to attract pets such as dogs and cats as preferable luxury foods.

Furthermore, in cases where the pet snack food is formed into a ball shape, a short stick shape, or the like, the pet will surely chew on it before swallowing it instead of wholly swallowing without chewing, which provides good textural quality for the pets and allows the feeders to hear the crunching sound and have an actual sensation of feeding food that the pets enjoy and feel more satisfaction.

Also, as recited in Item [2], in cases where a desired bulky formed product is produced by bulk-forming using an extruder, excessive fat content does not become included as it does when swelling by frying in oil, allowing it to be even lower in nutrition, as well as non-sticky on its surface, making it even easier to handle. Also, the size and the shape of the bulky formed product is set to a ball shaped product or a short stick shaped product with a diameter of 6 to 30 mm, making it even more certain to prevent the pet from wholly swallowing it.

In addition, by using starch ingredients as recited in Items [3] and [4], it is relatively inexpensive and excellent in formability.

Also, by using animal protein ingredients as recited in Items [5] to [8], it provides smell that pets prefer and attracts pets.

Also, by including optional ingredients as recited in Item [9], it can be made favorable according to the type of the pet, as well as have promising effects on health enhancement for pets.

Furthermore, by adopting the production method as recited in Item [10], a suitable pet snack food possessing the abovementioned effects can be mass produced in an easy and stable manner with relatively few steps at a low cost.

### BRIEF DESCRIPTION OF THE DRAWINGS

The preferred embodiments of the present invention are shown by way of example, and not limitation, in the accompanying figures, in which:
Fig. 1 is a perspective view showing an example of a shaped pet snack food according to an embodiment of the present invention; and
Fig. 2 is a perspective view showing another example of a shaped pet snack food according to an embodiment of the present invention.

### DETAILED DESCRIPTION OF THE PREFERRED EMBODIMENTS

In the following paragraphs, some preferred embodiments of the invention will be described by way of example and not limitation. It should be understood based on this disclosure that various other modifications can be made by those in the art based on these illustrated embodiments.

A pet snack food according to an embodiment of the present invention is primarily provided as a snack food for dogs, but can also be provided as a snack food for cats, ferrets, or other various types of small household animals. In the following description, a pet snack food primarily supplied to dogs will be explained as one concrete example.

A pet snack food according to this embodiment includes starch and animal protein as essential ingredients, and preferably further includes various types of additional materials as optional ingredients.

As to the starch, the original material is not specifically limited. It is, however, preferable to employ the starch obtained from one or more original materials selected from the group consisting of rice, wheat, corn, potato, sweet potato and tapioca. The use of such starch can attain a relatively low material cost and results in excellent formability. Among these starches, it is more preferable to use white bran as rice starch or cornstarch refined as corn-based starch. In this case, there is an advantage that moderate hardness and strength can be given to a snack food which is a bulky formed food high in foaming ratio.

The animal protein mainly functions as flavoring ingredients to more attract pets, and is made of one or two types of materials among animal meat and fish.

More specifically, as the preferable animal meats, white meat of chicken, chicken stock, chicken head, and beef can be exemplified. With regard to fish, all most all types of fish can be used. For example, sardine, horse mackerel, saury, tuna, sea-bream, salmon, bonito, yellowtail, flatfish, blowfish(innocuous portion), eel, sharp-toothed eel, sweetfish, carp, squid, and octopus can be exemplified, though not especially limited to them. Among other things, it is preferable to use sardine. In this case, it is advantageous in that sardine can more effectively attract animals such as dogs and further enhances eating preference of those animals.

Furthermore, as to fish, almost all of the parts (except for poisonous portions, if any) can be used. Specifically, meets, heads, bones, entrails, fins, and other abatement debris and the like of fish can be exemplified. It is possible to use one of them, any combination thereof, or the entire parts of fish. Among other things, it is preferable to use at least one of heads, bones, entrails and other abatement debris of fish. These are non-eaten parts which remain after the fish processing and are usually disposed, but the use of them enables efficiently utilization of the waste materials obtained after the fish processing and contribution to the reduction of waste materials. Furthermore, the cost can be greatly reduced since they are available at low costs.

In the snack food according to the present invention, in addition to the abovementioned essential ingredients, optional ingredients as mentioned below for example can be arbitrarily added according to need.

The optional ingredients include, for example, gelatin as a thickening agent, sodium lactate as an antiaging and pH adjusting agent, deodorizer as a mouth odor eliminating agent, tea as a calorie reducing agent, shark cartilage as a favorability enhancing agent, fermented bean powder (soy fermenting substance, including soy isoflavone) and various types of yeasts typified by beer yeast, various types of vitamins as a health enhancing agent, and bean curd refuse (side product of tofu production and solid content after extracting soy milk, including dietary fiber) as a weight increasing agent.

The pet snack food preferably includes starch: 30 to 80 % by weight; animal protein: 5 to 40 % by weight in a state of containing water about 70 % by weight; and optional ingredients: 0 to 40 % by weight. The pet snack food is a product produced by swelling and forming the aforementioned mixed composition with the water content rate adjusted to 15 to 35 % by weight.

The swollen and formed product is in a dried state containing water about 5 to 20 % by weight.

If the combination ratio of the starch ingredients is too low, e.g., less than 30 % by weight, the bulk-forming becomes difficult. Even if it can be formed, the swollen formed product becomes fragile and easily breakable, which is difficult to handle. To the contrary, excessive blending ratio of the starch ingredients, e.g., 80 % or more by weight, may cause deteriorated pets' eating preference, which is not preferable. The preferable blending ratio of the starch ingredients is about 50 to 65 % by weight.

The blending ratio of the animal protein is preferably 5 to 40 % by weight in the aforementioned water contained state. The blending ratio of less than 5 % by weight may cause insufficient flavor effect, which in turn may result in a less attractive snack for pets. To the contrary, the excessive blending ratio of 40 % or more by weight causes a nutrient-rich food which is not preferred for the pets' health as a snack food for pets.

The blending ratio of the other optional ingredients can be adjusted depending on the types of the optional materials, and can be preferably set so as to fall within the range of 0 to 40 % by weight as a whole. The excessive blending ratio of 40 % or more by weight results in poor formability and pets' poor eating preference, which is not preferable.

The pet snack food can be produced by bulk-forming the aforementioned mixed compositions into any shapes, e.g., a ball-shape, a short bar shape, or a comma shape with an extruder.

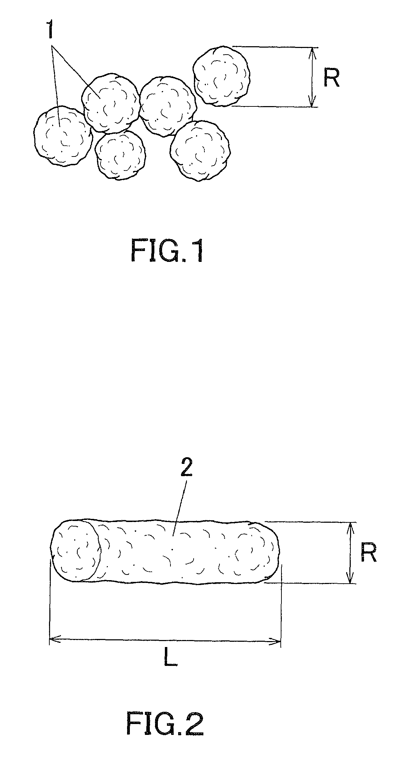

Fig. 1 shows an example of the pet snack food 1 formed into a ball shape, and Fig. 2 shows an example of the pet snack food 2 formed into a short stick shape.

These snack foods 1 and 2 are foamed from the abovementioned mixed composition at a foaming ratio of 3 to 20. If the foaming ratio is set to be less than 3, the pet snack food becomes nutrient-rich for its volume ratio, resulting in inappropriate pet snack food including its texture. To the contrary, if the foaming ratio is set to over 20, the pet snack food become fragile and easily breakable, which is inconvenient for handling. The preferable foaming ratio falls within the range of about 8 to 20, more preferably falls within the range of about 10 to 15.

The foaming ratio is mainly controlled by the amount of the water contained in the mixed compound and the extrusion temperature. For this reason, the amount of the water content is preferably adjusted to 15 to 35 % by weight, more preferably about 20 to 30 % by weight.

The abovementioned pet snack food 1 and 2 is preferably formed to have a diameter of about 6 to 30 mm. In the case of a short bar shape, the length L is preferably set to about 40 to 80 mm. The diameter R smaller than the above increases the possibility of swallowing the whole snack pet food by pets, especially dogs. Also, in cases where the pet snack food is too large in diameter R as well as length L, it becomes inconvenient to handle, which deteriorates the feeding action for feeding the pet snack food one by one, or a few pieces at a time by hand. In the case of a ball shaped pet snack food, it is preferable that the diameter is about 10 to 25 mm, more preferably about 15 to 20 mm.

The forming method of the swollen bulky formed product as a pet snack food is not specifically limited to a bulk-forming using an extruder, but can be, for example, a method of cutting a thin bar-shaped extruded material into a predetermined length and then baking the cut material or frying the cut material in oil to thereby obtain a formed final product.

The simplest, easiest, and most productive production method, however, is a bulk-forming method using an extruder as mentioned above.

The most preferable production method includes: preparing a forming material which is a mixed composition including starch ingredient: 30 to 80 % by weight, animal protein: 5 to 40 % by weight, and optional ingredients: 0 to 40 % by weight, wherein the mixed composition is adjusted to 15 to 35 % by weight in water content rate; extruding the mixed composition while controlling the extruding temperature at 100 to 180 °C using an extruder having a nozzle with a diameter of 3.0 to 8.0 mm to thereby foam the mixed composition at a foaming ratio of 3 to 20; and thereafter cutting an extruded material into a ball-shaped or a short bar-shaped swollen bulky formed product with a length of 3.0 to 70.0 mm.

In the abovementioned extruding step using an extruder, the set temperature of the extruder (i.e., the set temperature in the container) is not specifically limited. In general, the temperature can be arbitrarily set so as to fall within the range of about 30 to 250 °C. Even if the set temperature is low, the bulk-forming can be performed simultaneously with the extrusion by adjusting the rotating speed of the screw at the time of the heat-kneading or adjusting the water content of the kneaded material. However, it is preferable that the material temperature at the time of being extruded from the extrusion nozzle, or the extruding temperature, is controlled so as to fall within the range of 100 to 180 °C. If this temperature is too low, i.e., below 100 °C, the foaming of the material becomes insufficient. To the contrary, if the extrusion temperature is too high, or over 180 °C, the constituent material may be altered, and the foaming bulking speed of the material immediately after the extrusion becomes too fast to cause burst phenomenon, which in turn makes it difficult to obtain a bulky formed product with a stable shape. The preferable extrusion temperature is set so as to fall within the rage of about 120 to 150 °C.

The diameter of the extrusion nozzle is preferably set to 3.0 mm to 8.0 mm. If the diameter is less than 3.0 mm, the bulky formed product becomes too small in diameter, resulting in small pellet-like products. To the contrary, if the diameter is too big, or over 8.0 mm, the bulky formed product becomes too large in diameter. The preferable nozzle diameter is about 5.0 mm ± (plus or minus) 1 mm, i.e., about 4.0 or 6.0 mm.

The extruded material is cut into appropriate dimensions immediately after the extrusion from the extrusion nozzle. The cutting can performed by, for example, rotating or repeatedly reciprocating a shear blade positioned at the outlet side of the extrusion nozzle. This determines the length of the bulky formed product as a pet snack food, which in turn determines the shape thereof. In details, cutting the extruded material into a length which is approximately equal to the nozzle diameter causes a bulky formed product with a nearly spherical shape, and cutting the extruded material into a length longer than the nozzle diameter causes a bulky formed product with an approximately short cylindrical shape having a length longer than the diameter.

In the present invention, it should be understood that the abovementioned nozzle diameter of 3.0 to 8.0 mm does not always mean a circular nozzle diameter, and also is defined by the equivalent diameter thereof (defined by 4 x cross-sectional area/ circumferential length) when the nozzle shape is an irregular shape other than a circular shape. Therefore, the extrusion nozzle is not necessarily limited to an extrusion nozzle circular in shape.

### <EXAMPLES>

Next, concrete examples the present invention will be explained.

### <EXAMPLE 1>

As shown in the following Table 1, a mixed composition including rice flour as starch ingredient: 60 % by weight, white meat of chicken as animal protein: 33 % by weight, sodium-lactate: 2 % by weight, and beer yeast: 5 % by weight was continuously introduced into an extrusion container of an extruder with the water content adjusted to 25 % and sufficiently kneaded. Then, an extrusion bulk-forming was performed under the conditions of: set temperature of the extruder: 120 °C; extrusion nozzle diameter: 5.0 mm (circular); extrusion temperature (discharge temperature): 150 °C; extrusion speed: about 100 mm/sec; and cutting length immediately after the extrusion: 5.0 mm. As a result, as shown in Table 3, a generally ball-shaped bulky-formed product having a diameter R of 17 to 21 mm, foaming ratio of about 10, and slightly yellowish ivory color was obtained.

### <EXAMPLES 2 to 8>

In each example, extrusion bulk-forming was performed in the same manner as in Example 1 except that the composition of the forming material was set as shown in Table 1 and 2, and the extruding temperature (discharge temperature) of the extruder was set to the temperature as shown in Tables 1 and 2. The diameter, shape, foaming ratio, etc., of the obtained bulky formed product are as shown in Table 3.

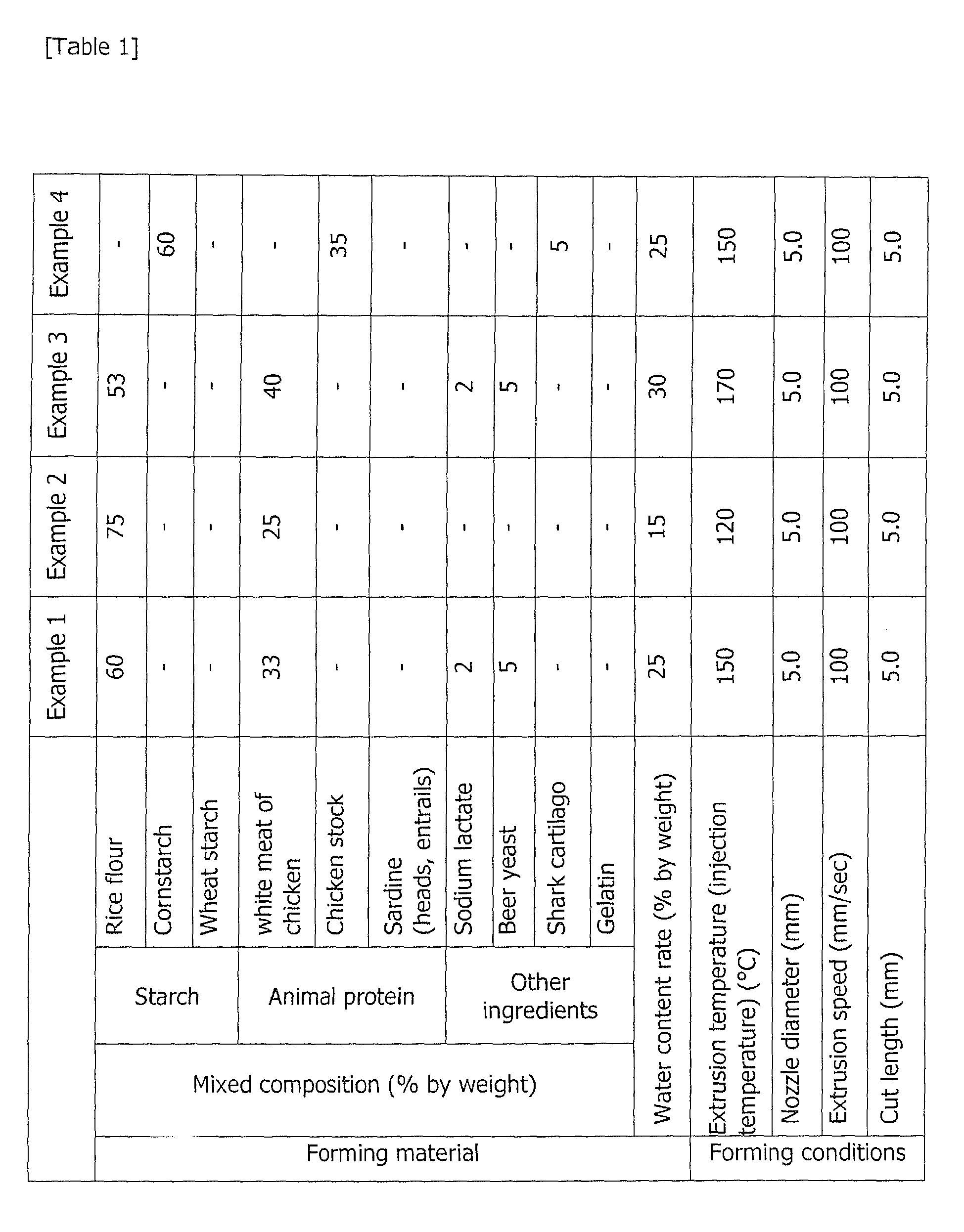

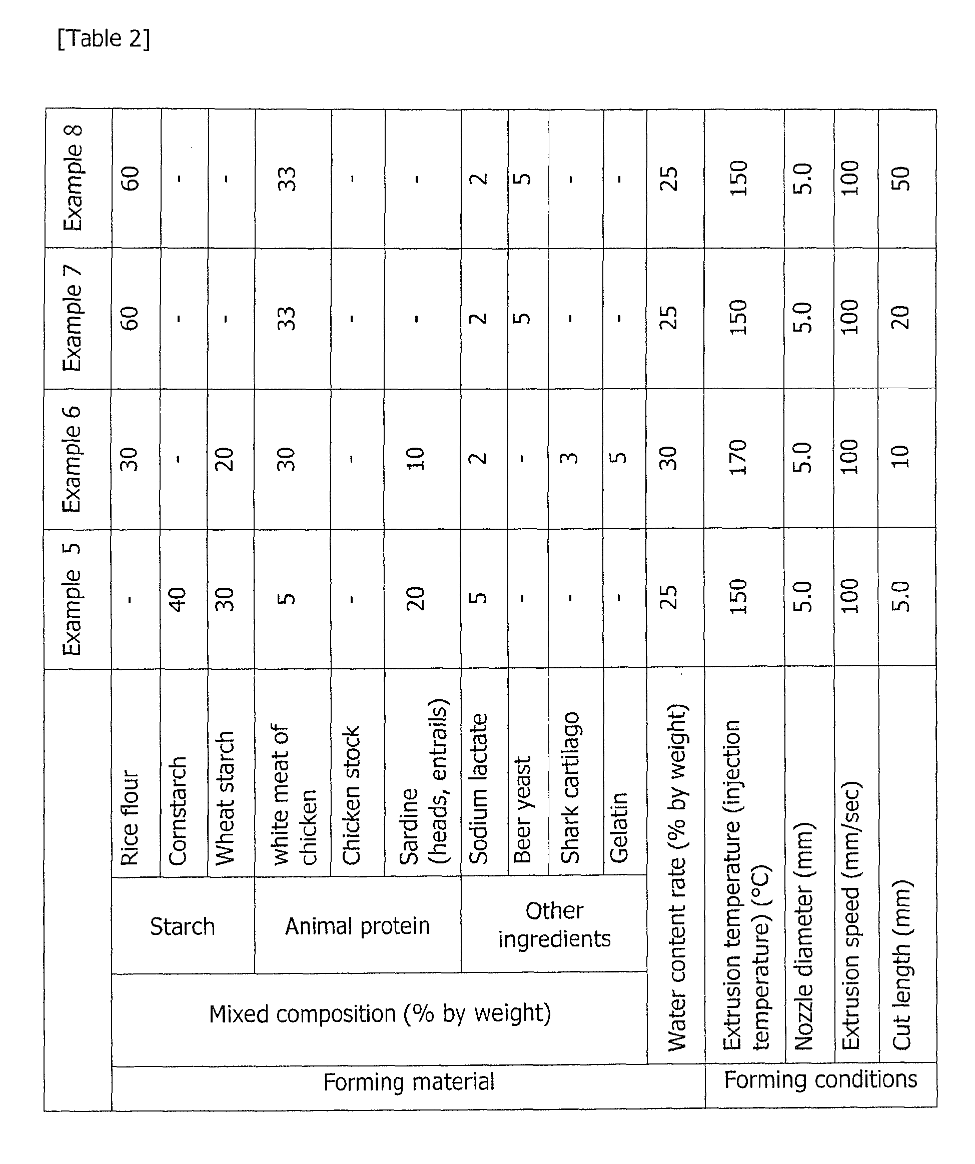

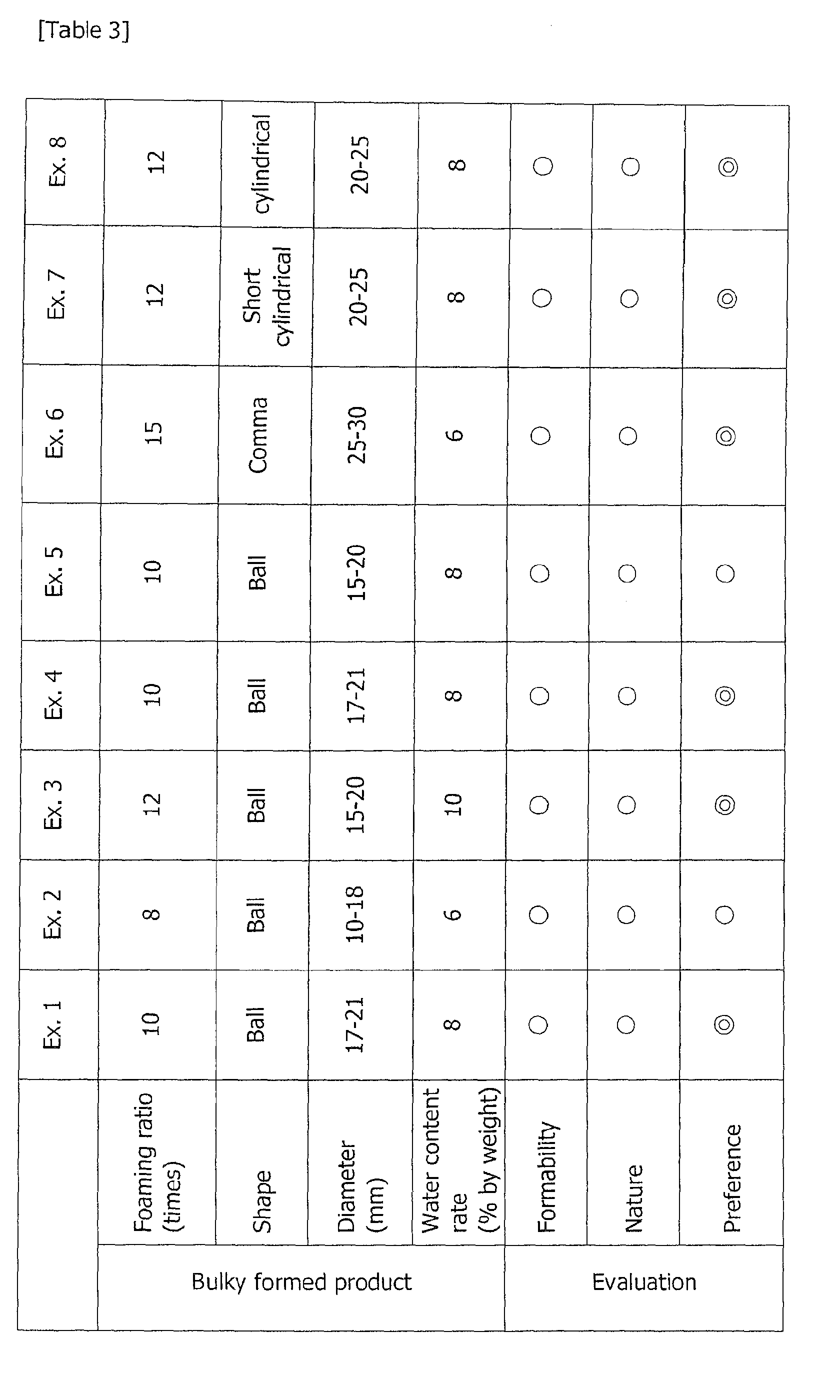

Next, the following three items, i.e., formability, nature, and preference, were evaluated for each of the bulky formed products (pet snack foods) obtained by the above Examples 1 to 8, and the results are shown in Table 3.

### <EVALUATION OF FORMABILITY>

"○" shows that the bulky extrusion by an extruder was executed smoothly without causing any problems and that the formability was good.

### <EVALUATION OF NATURE>

"○" shows that the bulky formed product did not easily lose shape, had hardness and shape retaining ability not destroyed by slight external force, and was not sticky on its surface, as a comprehensive evaluation regarding the aspect of nature.

### <EVALUATION OF PREFERENCE>

An experiment was repeated targeting two three-year-old mixed-breed dogs and an eight-year-old Shiba-dogs, where their owners held and fed with hand one piece of the bulky formed product of Examples 1 to 8 one by one by presenting it before the dogs' noses at 3 P.M. to 4 P.M., i.e., 2 to 3 hours before the regular feeding time of around 6 P.M. And for each dog, "⊚" was given as an evaluation that the food was highly excellent in attraction and texture, when all of the dogs were immediately attracted and chewed on it with crunching sound before swallowing, and "○" was given as an evaluation that the food was somewhat excellent in attraction and texture, when one dog either was not attracted to it well or did not make audible and clear crunching sound of chewing.

As will be apparent from the results shown in Table 3, all of the pet snack foods were excellent in formability, nature, and preference, and were extremely small in essential composition amount for a highly foamed bulky formed product. Therefore, even if it is fed in large amounts as a snack, there are no adverse effects on the pet health, which means that it is more preferable and excellent than conventional products as a pet snack food used for improving and deepening interaction with pets.

In addition, by selecting the types of animal protein and optional compositions, the pet snack food according to the present invention can be suitably provided to cats, ferrets, and other household small animals other than dogs.

This application claims priority under 35 U.S.C. §119 to Japanese Patent Application No. 2008-122532 filed on May 8, 2008, the entire disclosure of which is incorporated herein by reference in its entirety.

It should be understood that the terms and expressions used herein are used for explanation and have no intention to be used to construe in a limited manner, do not eliminate any equivalents of features shown and mentioned herein, and allow various modifications falling within the claimed scope of the present invention.

### INDUSTRIAL APPLICABILITY

The pet snack food according to the present invention can be used as a supplementary food for pets.

## Claims

1. A pet snack food, comprising:
starch and animal protein as essential ingredients,
wherein the pet snack food is a bulky formed product having a foaming ratio of 3 to 20.

2. The pet snack food as recited in claim 1, wherein the bulky formed product is a ball shaped or short bar shaped product formed by bulk-forming kneaded materials including starch and animal protein with an extruder.

3. The pet snack food as recited in claim 1, wherein the starch is an ingredient obtained from one or more materials selected from the group consisting of rice, wheat, corn, potato, sweet potato, and tapioca.

4. The pet snack food as recited in claim 2, wherein the starch is an ingredient obtained from one or more materials selected from the group consisting of rice, wheat, corn, potato, sweet potato, and tapioca.

5. The pet snack food as recited in claim 1, wherein the animal protein is an ingredient obtained from either one of or both the materials of animal meat and fish.

6. The pet snack food as recited in claim 2, wherein the animal protein is an ingredient obtained from either one of or both the materials of animal meat and fish.

7. The pet snack food as recited in claim 3, wherein the animal protein is an ingredient obtained from either one of or both the materials of animal meat and fish.

8. The pet snack food as recited in claim 4, wherein the animal protein is an ingredient obtained from either one of or both the materials of animal meat and fish.

9. The pet snack food as recited in any one of claims 1 to 8, wherein the pet snack food further comprises one or more ingredients obtained from one or more than two materials selected from the group consisting of gelatin, sodium lactate, deodorizer, tea, shark cartilage, fermented bean powder, various types of yeasts, various types of vitamins, and bean curd refuse, as optional ingredients.

10. A method for producing a pet snack food, comprising:
preparing a mixed composition as a forming material including starch ingredient: 30 to 80 % by weight, animal protein: 5 to 40 % by weight, and optional component ingredients: 0 to 40 % by weight, wherein the water content rate of the mixed composition is adjusted to 15 to 35 % by weight;
extruding the mixed composition through an extruder with a nozzle diameter of 3.0 to 8.0 mm while controlling the extrusion temperature at 100 to 180 °C to obtain a swollen bulky material having a foaming ratio of 3 to 20; and
after the extrusion, cutting the extruded material into a length of 3.0 to 70.0 mm to thereby obtain a ball shaped, short stick shaped, or a flat plate shaped product as a pet snack food.
